# EUROPÄISCHE PATENTANMELDUNG

(11) **EP 4 776 498 A1**
(43) Veröffentlichungstag der Anmeldung: **15.07.2026**
(21) Anmeldenummer: 25223185.7
(22) Anmeldetag: 12.12.2025
(51) Int. Cl.: H02M 1/32, H02M 3/335

(54) **SCHALTUNGSANORDNUNG UND TRAKTIONSNETZ**

(30) Priorität: 08.01.2025 DE 102025100488
(71) Anmelder: Volkswagen Aktiengesellschaft, 38440 Wolfsburg (DE)
(72) Erfinder: Kube, Adrian, 38440 Wolfsburg (DE)

(57) **Zusammenfassung**

Die Erfindung betrifft eine Schaltungsanordnung (1), wobei die Schaltungsanordnung (1) mindestens eine erste Hochvolt-Komponente (2), einen galvanisch getrennten DC/DC-Wandler (7) und mindestens einen Zwischenkreiskondensator (10) aufweist, die alle in einem gemeinsamen Gehäuse (16) angeordnet sind, wobei der galvanisch getrennte DC/DC-Wandler (7) eingangsseitig mit dem mindestens einen Zwischenkreiskondensator (10) und ausgangsseitig mit einem Niedervoltbordnetz (8) verbunden, wobei die Schaltungsanordnung (1) mindestens eine Ansteuerschaltung (15) aufweist, die derart ausgebildet ist, in Abhängigkeit eines Signals den mindestens einen Zwischenkreiskondensator (10) aktiv zu entladen, wobei die Ansteuerschaltung (15) derart ausgebildet ist, den mindestens einen Zwischenkreiskondensator (10) über den DC/DC-Wandler (7) zu entladen, sowie ein Traktionsnetz (100).

## Beschreibung

Die Erfindung betrifft eine Schaltungsanordnung, wobei die Schaltungsanordnung mindestens eine erste Hochvolt-Komponente, einen galvanisch getrennten DC/DC-Wandler und mindestens einen Zwischenkreiskondensator aufweist, sowie ein Traktionsnetz für ein Elektrofahrzeug.

Solche Schaltungsanordnungen sind beispielsweise Bestandteil eines Traktionsnetzes eines Elektrofahrzeugs. Dabei ist beispielsweise die mindestens eine erste Hochvolt-Komponente ein Wechselrichter, der mit einer Hochvolt-Batterie und einer Elektromaschine verbunden ist. Zwischen der Hochvolt-Batterie und dem Wechselrichter ist dann ein Zwischenkreiskondensator angeordnet. Dabei kann der Zwischenkreiskondensator auch aus einer Reihenschaltung aus zwei Kondensatoren bestehen. In bestimmten Situationen muss der Zwischenkreiskondensator aktiv entladen werden. Eine solche Situation kann beispielsweise ein Crash sein. Eine andere Situation kann auch das Abstellen des Elektrofahrzeugs selbst sein. Dabei sind verschiedene aktive Entladeschaltungen bekannt, beispielsweise eine Reihenschaltung aus einem Schaltelement und einem Widerstand, die parallel zum Zwischenkreiskondensator angeordnet sind. Weiter ist es auch bekannt, die Halbbrücken des Wechselrichters zum Entladen zu verwenden, beispielsweise indem diese kurzfristig in den aktiven Kurzschluss-Modus geschaltet werden. Auch Kombinationen dieser Maßnahmen sind bekannt.

Weiter sind sogenannte On-Board-Ladegeräte (OBC On-board-charger) bekannt, mittels denen eine Hochvolt-Batterie aus einer externen Wechselspannungsquelle geladen werden kann. Diese weisen zur Glättung ebenfalls einen Zwischenkreiskondensator auf. Auch dieser Zwischenkreiskondensator muss situativ aktiv entladen werden.

Aus der WO 2024/079112 A1 ist eine Fahrzeugladeschaltung mit einem ersten Gleichspannungsanschluss, einem zweiten Gleichspannungsanschluss, einem Gleichspannungswandler mit vorgeschaltetem Zwischenkreiskondensator und mindestens einer Vor-/Entladeschaltung bekannt, über die der erste Gleichspannungsanschluss mit dem Zwischenkreiskondensator verbunden ist, wobei der zweite Gleichspannungsanschluss über den Gleichspannungswandler mit dem Zwischenkreiskondensator verbunden ist. Dabei weist die Vor-/Entladeschaltung mindestens einen ersten Umschalter auf, der in einer ersten Stellung eine direkte Verbindung zwischen einem ersten Pol des Zwischenkreiskondensators und einem ersten Potential des ersten Gleichspannungsanschlusses herstellt und der in einer zweiten Stellung den ersten Pol des Zwischenkreiskondensators über einen Entladewiderstand und über einen zweiten Umschalter mit dem zweiten Pol des Zwischenkreiskondensators verbindet. Dabei erfolgt die Entladung des Zwischenkreiskondensators zunächst über den Gleichspannungswandler und anschließend über den Entladewiderstand, sodass die Verlustleistung über dem Entladewiderstand reduziert wird.

Der Erfindung liegt das technische Problem zugrunde, den aktiven Entladevorgang einer Schaltungsanordnung mit mindestens einer ersten Hochschalt-Komponente, einem galvanisch getrennten DC/DC-Wandler und mindestens einem Zwischenkreiskondensator zu verbessern sowie ein entsprechendes Traktionsnetz zu schaffen.

Die Lösung des technischen Problems ergibt sich durch eine Schaltungsanordnung mit den Merkmalen des Anspruchs 1 und ein Traktionsnetz mit den Merkmalen des Anspruchs 10. Weitere vorteilhafte Ausgestaltungen der Erfindung ergeben sich aus den Unteransprüchen.

Die Schaltungsanordnung weist mindestens eine erste Hochvolt-Komponente, einen galvanisch getrennten DC/DC-Wandler und mindestens einen Zwischenkreiskondensator auf, die alle in einem gemeinsamen Gehäuse angeordnet sind, wobei der galvanisch getrennte DC/DC-Wandler eingangsseitig mit dem mindestens einen Zwischenkreiskondensator und ausgangseitig mit einem Niedervoltbordnetz verbunden ist. Weiter weist die Schaltungsanordnung mindestens eine Ansteuerschaltung auf, die derart ausgebildet ist, in Abhängigkeit eines Signals den mindestens einen Zwischenkreiskondensator aktiv zu entladen, wobei die Ansteuerschaltung derart ausgebildet ist, den mindestens einen Zwischenkreiskondensator über den DC/DC-Wandler zu entladen. Hierdurch werden mehrere Vorteile erreicht. Durch die gemeinsame Anordnung in einem Gehäuse wird die Gefahr von Kabelbrüchen oder ähnlichen Schäden der Zuleitungen reduziert, sodass die Funktionsfähigkeit des DC/DC-Wandlers als aktive Entladeschaltung besser gewährleistet ist. Ein weiterer Vorteil der Schaltungsanordnung ist, dass die im Zwischenkreis gespeicherte Energie nicht in Wärme umgesetzt wird, sondern vielmehr im Niedervoltbordnetz zwischengespeichert werden kann.

Das Signal zum Aktivieren der aktiven Entladung kann beispielsweise ein Crashsignal oder ein Signal über einen Fehler einer Hochvoltkomponente oder ein Signal sein, dass das Fahrzeug abgeschaltet wird. Der galvanisch getrennte DC/DC-Wandler ist beispielsweise ein Resonanzwandler. Vorzugsweise ist mindestens eine zweite Hochvolt-Komponente in dem Gehäuse angeordnet und nutzt ebenfalls den Zwischenkreiskondensator. Durch die gemeinsame Nutzung des gleichen Zwischenkreiskondensators werden Bauteile eingespart und das Design ist sehr kompakt und kann in einem crashsicheren Bereich eines Elektrofahrzeugs angeordnet werden.

In einer Ausführungsform ist die Ansteuerschaltung derart ausgebildet, die Ausgangsspannung des DC/DC-Wandlers zu erhöhen, sodass der Entladevorgang beschleunigt wird. Ist das Niedervoltbordnetz z.B. ein 12 V-Bordnetz, so kann die Ausgangsspannung von 12,5 - 12,9 V auf 16 - 16,5 V erhöht werden, da die Niedervoltkomponenten derartige Spannungen zerstörungsfrei aushalten. Bei einem 24 V- oder 48 V-Bordnetz ist dann die Spannungserhöhung entsprechend den Toleranzen der Bauelemente anzupassen.

Vorzugsweise wird die Energie in einer Niedervoltbatterie und/oder einem Kondensator gespeichert. Allerdings kann es passieren, dass die Niedervoltbatterie bereits vollaufgeladen bzw. nicht mehr viel Ladung aufnehmen kann.

In einer weiteren Ausführungsform ist daher die Ansteuerschaltung derart ausgebildet, mindestens einen Verbraucher im Niedervoltbordnetz beim aktiven Entladen des Zwischenkreiskondensators einzuschalten, um entsprechend Strom am Ausgang des DC/DC-Wandlers zu ziehen.

In einer weiteren Ausführungsform weist das Niedervoltbordnetz mindestens eine Niedervoltbatterie auf, die auf dem Gehäuse angeordnet ist. Hierdurch sind die Verbindungswege zwischen dem Ausgang des DC/DC-Wandlers und der Niedervoltbatterie sehr kurz, sodass die Gefahr von Leistungsbrüchen reduziert ist.

In einer weiteren Ausführungsform sind am Ausgang des DC/DC-Wandlers mindestens eine Reihenschaltung aus mindestens einem Schaltelement und einem Verbraucher angeordnet, die im Gehäuse angeordnet sind. Hierdurch wird ein Notfall-Abschaltpfad realisiert, falls keine weiteren Verbraucher mehr am Ausgang des DC/DC-Wandlers anliegen. Dies kann beispielsweise durch eine Strom- und/oder Spannungsmessung am Ausgang des DC/DC-Wandlers erfasst sein. Wird also beispielsweise erfasst, dass die Niedervoltbatterie abgerissen ist, so kann die Ansteuerschaltung das Schaltelement schließen. Dabei liegt aber der Abschaltpfad der Reihenschaltung auf dem unkritischen Niedervolt-Potential.

In einer weiteren Ausführungsform ist das Schaltelement als Niedervolt-MOSFET oder als Relais ausgebildet.

In einer weiteren Ausführungsform weist das Gehäuse mindestens zwei Dome auf, wobei mindestens ein Dom eine Wicklung aufweist, die mit dem Schaltelement und einer Gehäusemasse verbunden ist. Die Dome liegen dabei zwischen einem Deckel und einem Boden des Gehäuses, wobei das durch die Wicklung induzierte Magnetfeld Wirbelströme in Boden und Deckel erzeugt werden, die die elektrische Energie in Wärme umsetzen. Vorzugsweise ist das Gehäuse mit einem Kühlkörper verbunden, sodass die so erzeugte Wärme schnell abgeführt werden kann.

In einer weiteren Ausführungsform ist die erste Hochvolt-Komponente ein Wechselrichter für eine Elektromaschine, beispielsweise eine fremderregte Synchronmaschine, und die zweite Hochvolt-Komponente ein On-Board-Ladegerät. Der Vorteil ist, dass diese beiden Komponenten jeweils inaktiv sind, wenn die andere Komponente aktiv ist, sodass es keine Probleme bei der gemeinsamen Nutzung des mindestens einen Zwischenkreiskondensators gibt. Dies gilt auch, wenn einzelne Elemente des Wechselrichters für die Funktion des On-Board-Ladegeräts verwendet werden.

In einer weiteren Ausführungsform ist der Zwischenkreiskondensator mit einer Hochvoltbatterie verbunden, wobei zwischen der Hochvoltbatterie und dem Zwischenkreiskondensator mindestens ein Schaltelement angeordnet ist, um die Hochvoltbatterie vom Zwischenkreiskondensator vor dem aktiven Entladen zu trennen. Vorzugsweise sind mindestens zwei Schaltelemente vorhanden, um die Hochvoltbatterie allpolig zu trennen, wobei das oder die Schaltelemente vorzugsweise als Schütze ausgebildet sind.

Die Erfindung wird nachfolgend anhand bevorzugter Ausführungsbeispiele näher erläutert. Die Figuren zeigen:
- Fig. 1: eine schematische Darstellung einer Schaltungsanordnung in einem Traktionsnetz und
- Fig. 2: eine schematische Darstellung zweier Dome.

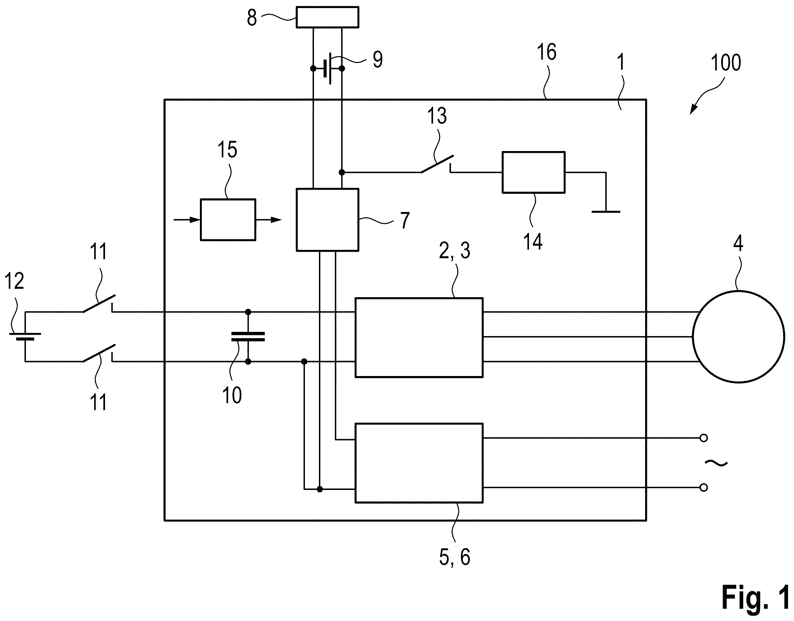

In der Fig. 1 ist schematisch eine Schaltungsanordnung 1 in einem Traktionsnetz 100 dargestellt. Die Schaltungsanordnung 1 weist eine erste Hochvolt-Komponente 2 auf, die als Wechselrichter 3 ausgebildet ist, wobei der Wechselrichter 3 ausgangsseitig mit einer Elektromaschine 4 verbunden ist. Weiter weist die Schaltungsanordnung 1 eine zweite Hochvolt-Komponente 5 auf, die als On-Board-Ladegerät 6 ausgebildet ist. Eingangsseitig ist das On-Board-Ladegerät 6 mit einer externen Wechselspannungsquelle verbunden. Weiter weist die Schaltungsanordnung 1 einen galvanisch getrennten DC/DC-Wandler 7 auf, der mit einem Niedervoltbordnetz 8 mit einer Niedervoltbatterie 9 verbunden ist. Weiter weist die Schaltungsanordnung 1 einen Zwischenkreiskondensator 10 auf, der sowohl mit der ersten Hochvolt-Komponente 2 als auch mit der zweiten Hochvolt-Komponente 5 sowie dem DC/DC-Wandler 7 verbunden ist. Der Zwischenkreiskondensator 10 ist über Schaltelemente 11 mit einer Hochvolt-Batterie 12 verbunden. Weiter ist am Ausgang des DC/DC-Wandlers 7 eine Reihenschaltung angeordnet, die aus einem weiteren Schaltelement 13 und einem Verbraucher 14 besteht. Die erste Hochvolt-Komponente 2 und die zweite Hochvolt-Komponente 5 nutzen dabei den gleichen Zwischenkreiskondensator 10. Dies ist einfach möglich, da der Wechselrichter 3 für die Elektromaschine 4 im AC-Ladebetrieb nicht benötigt wird und im Traktionsbetrieb das On-Board-Ladegerät 6 nicht benötigt wird. Dabei sind aber auch Ausführungen möglich, wo das On-Board-Ladegerät 6 und der Wechselrichter 3 teilweise ineinander integriert sind, insbesondere das On-Board-Ladegerät 6 Bauelemente des Wechselrichters 3 nutzt. Weiter weist die Schaltungsanordnung 1 mindestens eine Ansteuerschaltung 15 auf. Die Versorgungsspannung der Ansteuerschaltung 15 kann dabei beispielsweise durch den DC/DC-Wandler 7 zur Verfügung gestellt werden. Die Bauelemente der Schaltungsanordnung 1 sind in einem gemeinsamen Gehäuse 16 angeordnet, wobei das Gehäuse 16 an seiner Unterseite mit einem nicht dargestellten Kühlkörper verbunden sein kann. Die Niedervoltbatterie 9 kann dabei unmittelbar auf der Oberseite des Gehäuses 16 angeordnet sein, sodass die Verbindung zwischen Schaltungsanordnung 1 und Niedervoltbatterie 9 extrem kurz ist.

Tritt nun eine Situation ein, wo der Zwischenkreiskondensator 10 aktiv entladen werden soll, so erhält die Ansteuerschaltung 15 ein entsprechendes Signal beispielsweise von einem Steuergerät. Die Situation ist beispielsweise ein Crash oder das Abstellen des Elektrofahrzeuges. Ein nicht dargestelltes Batteriemanagement-Steuergerät öffnet dann die Schaltelemente 11, sodass der Zwischenkreiskondensator 10 von der Hochvolt-Batterie 12 getrennt wird. Die Ansteuerschaltung 15 erhöht dann die Ausgangsspannung am DC/DC-Wandler 7, sodass dieser mehr Energie vom Zwischenkreiskondensator 10 in das Niedervoltbordnetz 8 mit der Niedervoltbatterie 9 überträgt und so den Zwischenkreiskondensator 10 schnell entlädt. Dabei wird primär die Energie in der Niedervoltbatterie 9 gespeichert. Ist diese voll aufgeladen und kann keine Energie mehr aufnehmen, so kann die Ansteuerschaltung 15 das Einschalten eines Verbrauchers im Niedervoltbordnetz 8 veranlassen. Ergänzend oder alternativ kann der Verbraucher 14 zugeschaltet werden. Die Reihenschaltung aus Schaltelement 13 und Verbraucher 14 dient insbesondere als Rückfallebene, falls die Verbindung zwischen Schaltungsanordnung 1 und der Niedervoltbatterie 9 abgerissen ist. Sinkt dann die Spannung am Zwischenkreiskondensator 10 unter einen Schwellwert, kann dies dazu führen, dass der DC/DC-Wandler 7 nicht mehr arbeiten kann. Dieser Schwellwert liegt aber typischerweise unterhalb der Berührspannungsgrenze von 60 V, sodass diese verbleibende Restspannung unkritisch ist. Alternativ kann parallel zum Zwischenkreiskondensator 10 ein Schaltelement und ein Widerstand angeordnet sein, über die dann die Restspannung am Zwischenkreiskondensator 10 abgebaut werden kann. Durch die Schaltungsanordnung 1 ist es somit möglich, in vielen Fällen die Energie aus dem Zwischenkreiskondensator 10 beim aktiven Entladen in die Niedervoltbatterie 9 umzuladen, sodass diese nicht verloren geht.

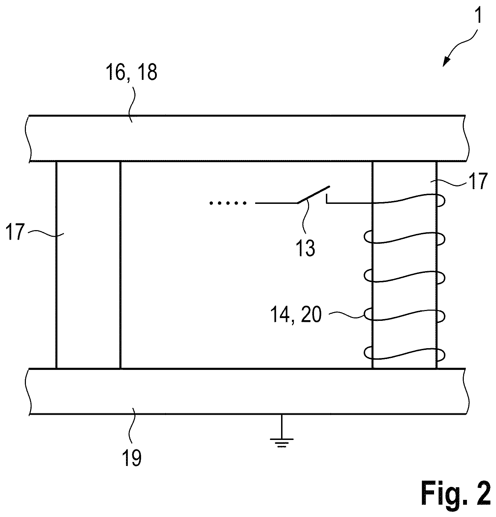

In der Fig. 2 ist schematisch eine Ausführungsform eines Verbrauchers 14 mit einem Schaltelement 13 dargestellt. Dabei weist das Gehäuse 16 der Schaltungsanordnung 1 mindestens zwei Dome 17 auf, die zwischen einer Oberseite 18 (Deckel) und einer Unterseite 19 (Boden) des Gehäuses 16 angeordnet sind. Dabei ist um mindestens einen Dom 17 eine Leitung 20 gewickelt, die mit einem Ende mit dem Schaltelement 13 verbunden ist und mit dem anderen Ende mit dem Gehäuse 16 verbunden ist. Wird das Schaltelement 13 geschlossen, so fließt ein Strom durch die gewickelte Leitung 20, der ein Magnetfeld erzeugt. Der magnetische Fluss fließt dann durch die Oberseite 18, Unterseite 19 und den anderen Dom 17. In der relativ dünnen Oberseite 18 bzw. Unterseite 19 werden dann Wirbelströme erzeugt, die die elektrische Energie in Wärme umsetzen.

### Bezugszeichenliste

- 1: Schaltungsanordnung
- 2: Hochvolt-Komponente
- 3: Wechselrichter
- 4: Elektromaschine
- 5: Hochvolt-Komponente
- 6: On-Board-Ladegerät
- 7: DC/DC-Wandler
- 8: Niedervoltbordnetz
- 9: Niedervoltbatterie
- 10: Zwischenkreiskondensator
- 11: Schaltelement
- 12: Hochvolt-Batterie
- 13: Schaltelement
- 14: Verbraucher
- 15: Ansteuerschaltung
- 16: Gehäuse
- 17: Dom
- 18: Oberseite (Deckel)
- 19: Unterseite (Boden)
- 20: gewickelte Leitung
- 100: Traktionsnetz

## Patentansprüche

1. Schaltungsanordnung (1), wobei die Schaltungsanordnung (1) mindestens eine erste Hochvolt-Komponente (2), einen galvanisch getrennten DC/DC-Wandler (7) und mindestens einen Zwischenkreiskondensator (10) aufweist, die alle in einem gemeinsamen Gehäuse (16) angeordnet sind, wobei der galvanisch getrennte DC/DC-Wandler (7) eingangsseitig mit dem mindestens einen Zwischenkreiskondensator (10) und ausgangsseitig mit einem Niedervoltbordnetz (8) verbunden, wobei die Schaltungsanordnung (1) mindestens eine Ansteuerschaltung (15) aufweist, die derart ausgebildet ist, in Abhängigkeit eines Signals den mindestens einen Zwischenkreiskondensator (10) aktiv zu entladen, wobei die Ansteuerschaltung (15) derart ausgebildet ist, den mindestens einen Zwischenkreiskondensator (10) über den DC/DC-Wandler (7) zu entladen.

2. Schaltungsanordnung (1) nach Anspruch 1, **dadurch gekennzeichnet, dass** die Ansteuerschaltung (15) derart ausgebildet, die Ausgangsspannung des DC/DC-Wandlers (7) zu erhöhen.

3. Schaltungsanordnung (1) nach Anspruch 1 oder 2, **dadurch gekennzeichnet, dass** die Ansteuerschaltung (15) derart ausgebildet ist, mindestens einen Verbraucher im Niedervoltbordnetz beim aktiven Entladen des Zwischenkreiskondensators (10) einzuschalten.

4. Schaltungsanordnung (1) nach einem der vorangegangenen Ansprüche, **dadurch gekennzeichnet, dass** das Niedervoltbordnetz (8) mindestens eine Niedervoltbatterie (9) aufweist, die auf dem Gehäuse (16) angeordnet ist.

5. Schaltungsanordnung (1) nach einem der vorangegangenen Ansprüche, **dadurch gekennzeichnet, dass** am Ausgang des DC/DC-Wandlers (7) mindestens eine Reihenschaltung aus mindestens einem Schaltelement (13) und einem Verbraucher (14) angeordnet sind, die im Gehäuse (16) angeordnet sind.

6. Schaltungsanordnung (1) nach Anspruch 5, **dadurch gekennzeichnet, dass** das Schaltelement (13) als Niedervolt-MOSFET oder als Relais ausgebildet ist.

7. Schaltungsanordnung (1) nach einem der Ansprüche 5 oder 6, **dadurch gekennzeichnet, dass** das Gehäuse (16) mindestens zwei Dome (17) aufweist, wobei mindestens ein Dom (17) eine Wicklung aufweist, die mit dem Schaltelement (13) und einer Gehäusemasse verbunden ist.

8. Schaltungsanordnung (1) nach einem der vorangegangenen Ansprüche, **dadurch gekennzeichnet, dass** die erste Hochvolt-Komponente (2) ein Wechselrichter (3) für eine Elektromaschine (4) und eine zweite Hochvolt-Komponente (5) ein On-Board-Ladegerät (6) ist.

9. Schaltungsanordnung (1) nach einem der vorangegangenen Ansprüche, **dadurch gekennzeichnet, dass** der Zwischenkreiskondensator (10) mit einer Hochvoltbatterie (12) verbunden ist, wobei zwischen der Hochvoltbatterie (12) und dem Zwischenkreiskondensator (10) mindestens ein Schaltelement (11) angeordnet ist.

10. Traktionsnetz (100) eines Elektrofahrzeugs, **dadurch gekennzeichnet, dass** das elektrische Traktionsnetz (100) eine Schaltungsanordnung (1) nach einem der Ansprüche 1 bis 9 aufweist.
